# EUROPEAN PATENT APPLICATION

(11) **EP 2 316 641 A1**
(43) Date of publication of application: **04.05.2011**
(21) Application number: 09015362.8
(22) Date of filing: 11.12.2009
(51) Int. Cl.: B32B 5/24, B32B 17/02, E04B 7/00, E04C 2/292, E04D 3/35

(54) **"Insulating composite (KWI) of two-layer structure and roof cover containing insulating composite (KWI)"**

(30) Priority: 02.11.2009 PL 38944309
(71) Applicant: Pradzynski, Andrzej, 60-326 Poznan (PL); Pradzynski, Jerzy, 60-401 Poznan (PL)
(72) Inventor: Pradzynski, Andrzej, 60-326 Poznan (PL); Pradzynski, Jerzy, 60-401 Poznan (PL)
(74) Representative: Passowicz, Marek

(57) **Abstract**

The subject of present invention relates to insulating composite (KWI), which consists of a layer of mineral or glass wool (MW) with horizontal fiber orientation and a layer of rigid polyisocyanurate foam (PIR) with cellular structure, bonded with an offset. The next subject of invention relates to roof cover, which consists of a load bearing layer made of trapezoidal load bearing metal sheet and an insulating layer made of mineral wool bonded with a layer of foam, preferably polyisocyanurate

## Description

The subject-matters of the present invention relate to an insulating composite (KWI) of two-layer structure and also to a roof cover containing the insulating composite (KWI).

Mineral wool (rock wool, stone wool), as a material characterized by non-flammability and fibrous structure, is used for thermal, explosion, and fire protection. The material has considerable resistance to chemical and biological corrosion, does not absorb moisture from air, is easy to process and non-toxic. Bulk density [kg/m3] of elements made of mineral wool determines their type. Elements of higher density are heavier and more resistant to mechanical damage, while elements of lower density (lighter) make a better thermal barrier. Mineral wool is commonly used in Poland in the form of boards, mats, felt, and granules.

Another material commonly used for thermal insulation and fire protection in construction industry is polyisocyanurate foam (PIR), a type of polyurethane. (PIR) foam has a unique chemical structure feature: cyclic polyisocyanurate chemical bonds that are formed in a reaction between substances containing hydroxide groups called polyols (constituent A) and polyisocyanates (constituent B). Such bonds between components form in a trimerization reaction and results in so-called polyisocyanurate system determining its unique useful attributes.

The most important feature of the material is improving fire safety by increasing heat resistance and reducing flammability (a fire retardant). In direct contact with fire and in increased temperature conditions, a layer of char forms on the surface, which effectively protects deeper layers against fire transfer and increases the system's fire resistance. It shows an additional advantage during fire, namely limiting generation of smoke, release of substances that can damage the ozone layer, and greenhouse gases, which improves the material's ecological quality.

Roof cover is a system, most often a multi-layer one, protecting the building against the impact of weather conditions. The basic function of roof covering is to protect the building against the impact of weather conditions. However, another function, equally important, especially in case of large roofing areas, is fire protection of the building. Multi-layer roof covering usually consists of a load bearing layer, thermal insulation, and finishing coat. In case of large stretches of roof, the load bearing part is usually made of trapezoidal metal sheet. Thermal insulation of such a structure is made most often using stone or mineral wool boards or using Styrofoam or polyurethane boards. Combined systems are also used: both Styrofoam and mineral wool boards are installed for thermal insulation. The finishing coat is usually made of roofing paper or PVC membrane. Roof cover can also include vapor barrier foil applied between the trapezoidal metal sheet and thermal insulation and glass fiber fabric laid between the thermal insulation layer and the PVC membrane. The load of roof cover is transmitted to the roof structure consisting, most often, of purlins, girders or beams.

In the solutions, depending on the technical requirements set for the building, the choice of the insulating layer determines the two basic parameters of the roof cover: thermal insulation and fire resistance.

The above requirements are mutually exclusive, depending on the type of insulation material used. The greater the thickness of the insulating layer (Styrofoam, polyurethane foam or other non-mineral insulation materials), the greater the fire load of the building.

In case of using mineral wool with density of about 80-100 kg/m³ for insulation, the material's load on the structure is very high, so the designed and erected structure has to be much stronger and must be able to transfer the load of the roof cover. The cost has to be covered by the investor. In terms of fire resistance, the solution is most beneficial.

In case of using Styrofoam, roof covers are characterized by low fire resistance, especially in terms of fire insulation (I) and integrity (E). In this solution, during a potential fire, dripping drops of melted polystyrene spread fire, which poses additional threat during evacuation of persons from the building.

Use of polyurethane foam insulation ensures good thermal insulation due to the very favorable thermal conductivity λ, while in fire terms the material's resistance is very low. Use of polyisocyanurate foams increases fire resistance of roofs but only in REI 20 class: fire load bearing capacity, integrity and insulation of not more than 20 minutes.

The essential feature of the invention is an insulating composite (KWI) of two-layer structure, consisting of a layer of mineral or glass wool (MW) with horizontal fiber orientation, bonded with a layer of rigid polyisocyanurate foam (PIR) with cellular structure and thermal conductivity λ of about 0.022, while the (MW) layer is preferably 20-50 mm thick and preferably 80-100 kg/m³ dense, and the (PIR) layer is preferably 20-150 mm thick and preferably 28-33 kg/m³ dense.

It is preferable that the (MW) and (PIR) layers are bonded with an offset.

Another essential feature is that the load bearing layer made of trapezoidal metal sheet is covered by PVC vapor barrier foil at least 0.20 mm thick, at least one layer of insulating composite (KWI) of two-layer structure, and a PVC membrane layer, preferably heat-sealed, and, depending on the needs, glass mat located under the insulation layer, and the insulating composite (KWI) consists of a layer of mineral or glass wool (MW) with horizontal fiber orientation bonded with a layer of rigid polyisocyanurate foam (PIR) with cellular structure and thermal conductivity λ of about 0.022 [W/m.K].

It is preferable that the (MW) and (PIR) layers are bonded with an offset, the (MW) layer is preferably 20-50 mm thick and preferably 80-100 kg/m³ dense, and the (PIR) is preferably 20-150 mm thick and preferably 28-33 kg/m³ dense.

It is also preferable that the following layers are placed on the load bearing layer made of trapezoidal metal sheet: vapor barrier PE foil 0.2 mm thick, insulating composite (KWI) and heat-sealed PVC membrane.

Then, it is preferable that the following layers are placed on the load bearing layer made of trapezoidal metal sheet: vapor barrier PE foil 0.2 mm thick, glass fiber mat, insulating composite (KWI) and heat-sealed PVC membrane.

Furthermore, it is preferable that the following layers are placed on the load bearing layer of trapezoidal metal sheet: vapor barrier PE foil 0.2 mm thick, insulating composite (KWI), glass fiber mat, and heat-sealed PVC membrane.

Then, it is also preferable that the following layers are placed on the load bearing layer of trapezoidal metal sheet: vapor barrier PE foil 0.2 mm thick, insulating composite (KWI), again vapor barrier PE foil, insulating composite (KWI), and heat-sealed PVC membrane.

It is also preferable that the following layers are placed on the load bearing trapezoidal metal sheet layer: vapor barrier PE foil 0.2 mm thick, glass fiber mat, insulating composite (KWI), again vapor barrier PE foil, insulating composite (KWI), and heat-sealed PVC membrane.

Moreover, it is preferable that the following layers are placed on the load bearing layer of trapezoidal metal sheet: vapor barrier PE foil 0.2 mm thick, insulating composite (KWI), again vapor barrier PE foil, insulating composite (KWI), glass fiber mat, and heat-sealed PVC membrane.

The subject matter of this technical solution is insulating material consisting of two materials, i.e. mineral wool and polyisocyanurate foam (PIR). Both materials are bonded and make up layered insulation composite (KWI) ready for use in layered insulation solutions, for instance as an insulation layer of flat roofs. The unique feature of (KWI) is that it combines two basic features of construction materials: good insulating properties and very good fire resistance parameters. It is an insulating material with excellent thermal insulation characteristics and fire integrity and insulation properties.

The materials are bonded and make up insulating composite for insulating areas requiring high fire resistance of the elements and very good thermal insulation properties. Both materials are characterized by good resistance to fire. The reaction to fire class of KWI composite is: B-s2, d0.

(KWI) composite, depending on the thickness of the layer applied on roofing, can match even REI30 class requirements, which makes the product clearly stand out of other common products available on the market.

In (KWI) boards (MW) and (PIR) are bonded with an offset, which favorably impacts its fire resistance properties. Preferable thermal conductivity of the materials is 0.040 [W/m-K] for (MW) and 0.022 [W/m K] for (PIR), so the overall heat transfer coefficient U for the firewall can be optimally adjusted.

The composite's essential feature is that the (MW) layer facing the inner side of the firewall (the side of the potential fire source) makes the first barrier to fire, while the foam (PIR) of given thickness makes another barrier to conducting high temperatures to subsequent layers of (PIR) foam (due to the material's properties).

(KWI) composite is a product made of environment-friendly raw materials. Load-bearing parameters of (PIR) foam and mineral wool ensure its suitability for insulating flat roofs that require compression strength of at least 150 kPa.

(KWI) composite can be used with layers of various thickness. For example, a layer of wool can be 30 mm thick, while the layer of (PIR) can be 50, 75, or 100 mm thick.

That option makes the layered solution suitable for many applications, from non-heated buildings, through buildings with inner temperature from 8 to 16°C, to heated buildings with indoor temperature exceeding 16°C.

The proposed roof cover solution combines good insulating properties with their good fire resistance parameters. The presented solution consists in using load bearing trapezoidal metal sheet as in standard roof cover solutions but insulating it with layered composite (KWI) of mineral or glass wool and polyisocyanurate foam.

The invention is described in more detail in the following examples of application, where specific figures show:
- Figure 1: Plan view and two cross sections of (KWI),
- Figures 2, 3 and 4: Cross sections of roof covers made using one layer of (KWI) composite, and
- Figures 5, 6 and 7: Cross-sections of roof covers made using two layers of (KWI) composite.

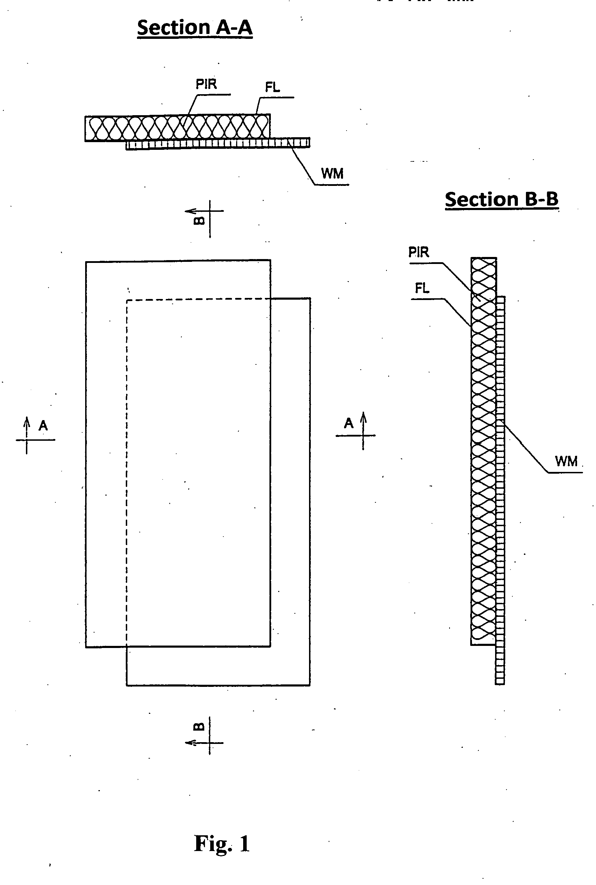

The insulating composite (KWI) presented on Figure 1 consists of two bonded, bidirectionally offset layers:
- a layer of mineral or glass wool (MW) with horizontal fiber orientation,
- a layer of rigid polyisocyanurate foam (PIR) with cellular structure, and
- a layer of aluminum foil, aluminum paper or glass fiber (FL).

Wool layer 1 and foam layer 2 function as a thermal insulator and fire retardant. Density of mineral wool (MW) is 80-100 kg/m³ and its thermal conductivity λ is about 0.040 [W/mK], while density of polyisocyanurate foam (PIR) is about 28-33 kg/m³ and its thermal conductivity λ is about 0.022 [W/mK].

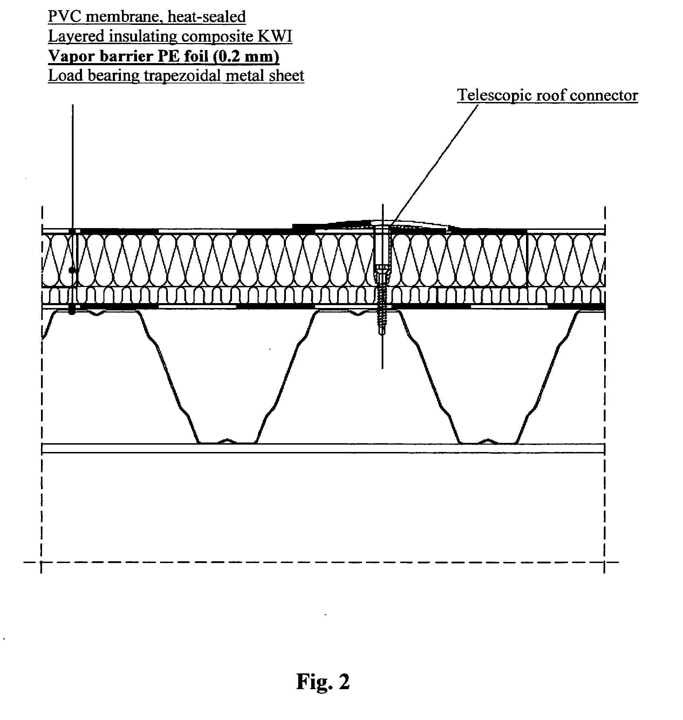

The roof cover solutions whose cross sections are presented at Figures 2 to 7 consist of the following layers:
- Fig. 2: Base layer of load bearing trapezoidal metal sheet, vapor barrier PE foil 0.2 mm thick, layered insulating composite (KWI) and heat-sealed PVC membrane;

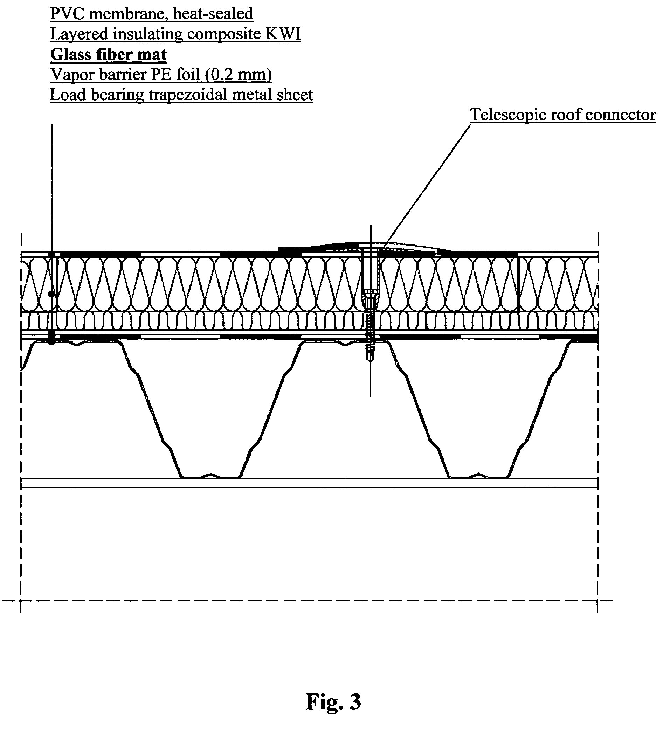

- Fig. 3: Base layer of load bearing trapezoidal metal sheet, vapor barrier PE foil 0.2 mm thick, glass fiber mat, layered insulating composite (KWI) and heat-sealed PVC membrane;

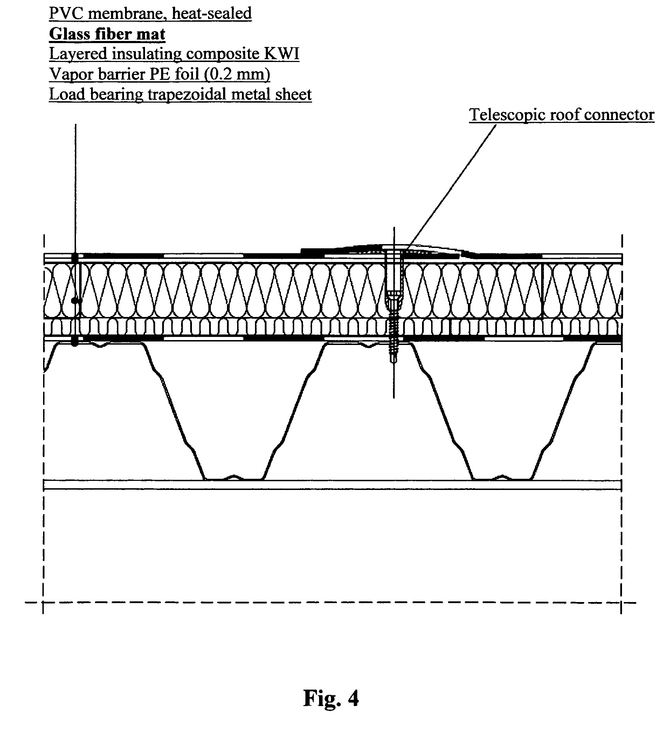

- Fig. 4: Base layer of load bearing trapezoidal metal sheet, vapor barrier PE foil 0.2 mm thick, layered insulating composite (KWI), glass fiber mat, and heat-sealed PVC membrane;

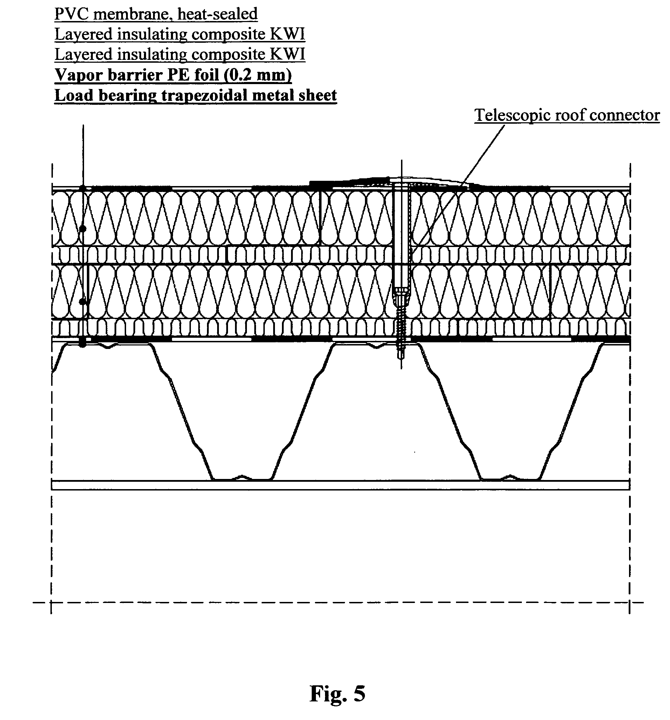

- Fig. 5: Base layer of load bearing trapezoidal metal sheet, vapor barrier PE foil 0.2 mm thick, layered insulating composite (KWI), layered insulating composite (KWI), and heat-sealed PVC membrane;

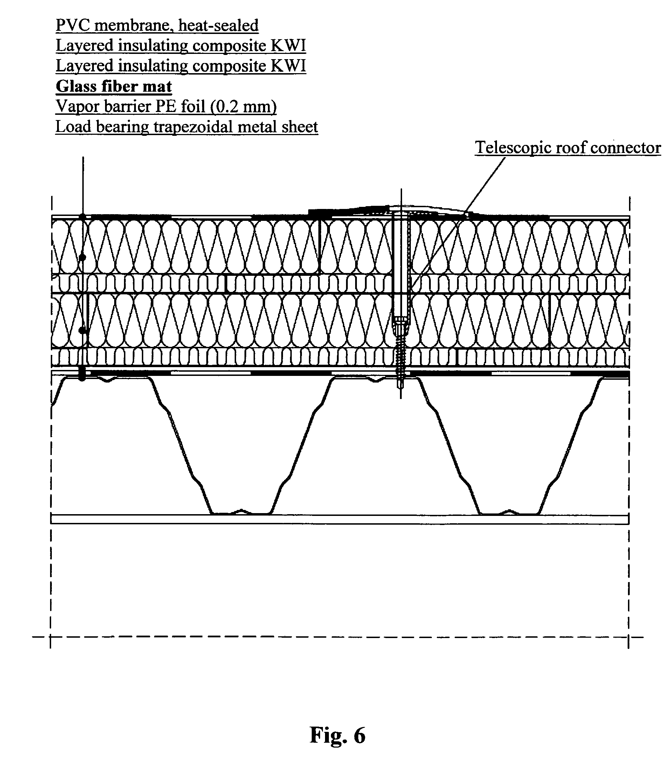

- Fig. 6: Base layer of load bearing trapezoidal metal sheet, vapor barrier PE foil 0.2 mm thick, layered insulating composite (KWI), layered insulating composite (KWI), and heat-sealed PVC membrane;

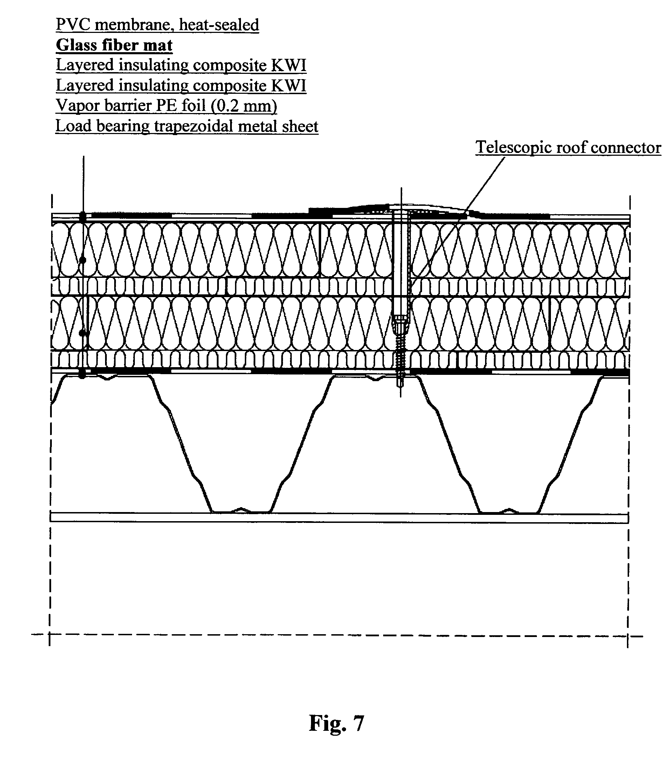

- Fig. 7: Base layer of load bearing trapezoidal metal sheet, vapor barrier PE foil 0.2 mm thick, layered insulating composite (KWI), layered insulating composite (KWI), glass fiber mat, and heat-sealed PVC membrane.

The table below presents examples of insulating layer mix, depending on the insulating requirements for the roof cover, using materials of various thermal insulation properties (various thermal conductivity).

As a vapor barrier, PVC foil, at least 0.20 mm thick, is placed on the load bearing layer of trapezoidal metal sheet, then KWI composite, glass mat (if needed), and heat-sealed PVC membrane.

In this layer combination, mineral wool (lower part of KWI) placed on the trapezoidal metal sheet, functions as a direct firewall. Polyisocyanurate foam (PIR), due to its very good fire properties, functions as another firewall and an excellent insulating layer. Compression strength of (PIR) foams (about 150 kPa) allows walking on the roof both during its installation and during utilization of the building (chimney sweeping, installation works, snow removal, etc.). (PIR) foam is an insulating material that, when exposed to fire, forms a protective shield of char, which prevents burning of subsequent foam layers. The mechanism increases the layered roof cover solution's fire resistance.

The composite is played on the roof as one layer and its total thickness, i.e. (MW) + (PIR) depends on the building's thermal requirements. Currently, insulating requirements for roof covers on public utility and industrial facilities are:

### Roofs, flat roofs:

a) for tᵢ > 16°C, the overall heat transfer coefficient U(max) [W/(m² · K)] must be 0.25
b) for 8°C < tᵢ < 16°C, the overall heat transfer coefficient U(max) [W/(m² · K)] must be 0.50
c) for tᵢ < 8 °C, the overall heat transfer coefficient U(max) [W/(m² · K)] must be 0.70 where **tᵢ** is the assumed temperature in the building.

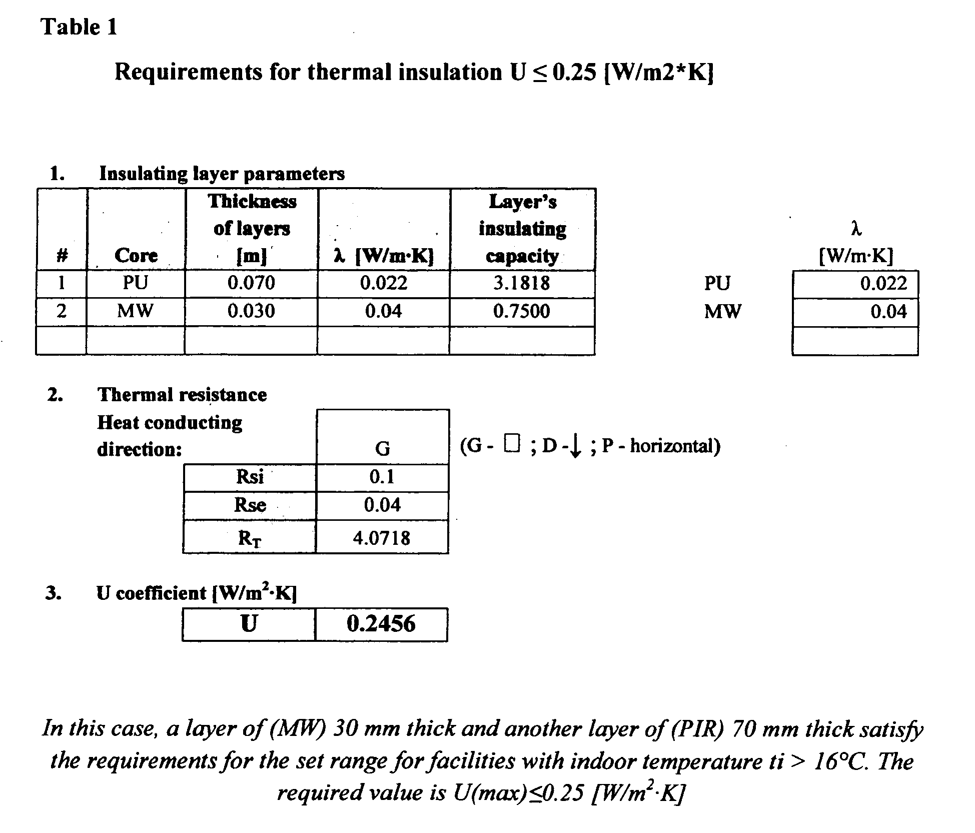

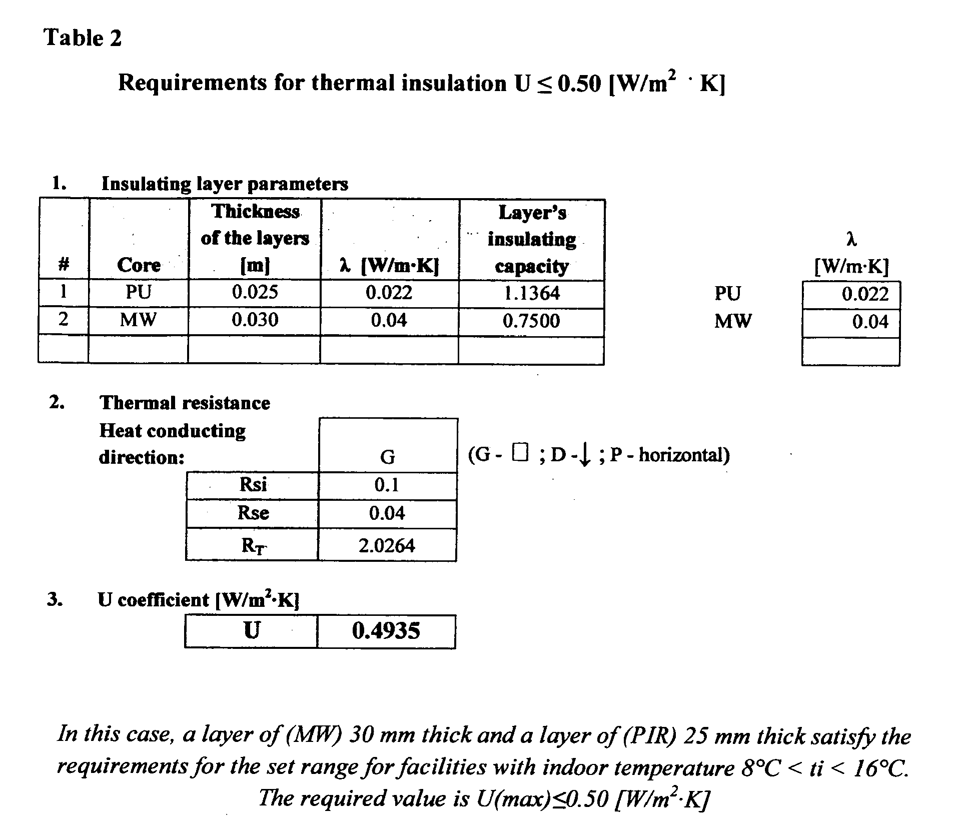

Depending on the required thermal insulation capacity of the roof cover, two-layer structure can be used: two layers of (KWI) laid with an offset.

The proposed solution ensures flexibility in choosing the roof's insulation layer and its fire resistance, for instance of the roof cover.

The examples above show how easy it is to adjust the thickness of the insulation layer to the desired U coefficient, as specified by regulations in force.

Design engineers, bearing in mind the requirements the designed building has to meet, can modify thickness of the layers and their number, e.g. using a double staggered system.

The structure of a KWI roof cover is very favorable due to:
- the required insulating capacity of the cover,
- the high fire resistance owed to MW and PIR layers,
- speed of installation of the insulating layer owed to the composite nature of the insulating material,
- possibility of using lighter steel structures owed to the lower weight of the roof cover's insulation compared to the insulation made of mineral wool only.

The proposed technical solution for roof covers using KWI ensures, depending on the thickness of specific layers (MW and PIR), the roof cover's resistance of up to 30 minutes (REI 30), so the time available for evacuation of people from the building in case of a fire is significantly longer.

Added value to the investor is also ensured by the lower cost of insuring the building with KWI used, due to the high standard of technical and construction solutions used.

Layered insulation composite (KWI) can be used in other technical solutions that have stringent fire resistance and thermal insulation requirements for the firewalls.

## Claims

1. An insulating composite (KWI) of two-layer structure consisting of a layer of mineral or glass wool (MW) with horizontal fiber orientation and a layer, bonded permanently with the previous one, of rigid polyisocyanurate foam (PIR) with cellular structure and thermal conductivity λ of about 0.022 [W/m*·*K], and the (MW) layer is preferably 20-50 mm thick and preferably 80-100 kg/m³ dense, while the layer of (PIR) is preferably 20-150 mm thick and preferably 28-33 kg/m³ dense.

2. The insulating composite according to claim 1, **characterized in that** the layers of (MW) and (PIR) are bonded with an offset.

3. A roof cover consisting of, at least, one load bearing layer made of load bearing trapezoidal metal sheet and a an insulating layer made of mineral wool bonded with a layer of foam, preferably polyisocyanurate, **characterized in that** the load bearing layer made of load bearing trapezoidal metal sheet is covered with vapor barrier PVC foil at least 0.20 mm thick, at least one insulating layer of insulating composite (KWI) with two-layer structure and a layer of PVC membrane, preferably heat-sealed and, depending on the needs, glass mat situated over the insulating layer, while the insulating composite (KWI) consists of a layer of mineral or glass wool (MW) with horizontal orientation of fibers bonded with a layer of rigid polyisocyanurate foam (PIR) with cellular structure and thermal conductivity λ of about 0.022 [W/m.K].

4. The roof cover according to claim 3, **characterized in that** the layers of (MW) and (PIR) are bonded with an offset and the (MW) layer is preferably 20-50 mm thick and preferably 80-100 kg/m³ dense, while the (PIR) layer is preferably 20-150 mm thick and preferably 28-33 kg/m³ dense.

5. The roof cover according to claim 3 or 4, **characterized in that** the following layers are placed on the load bearing layer made of load bearing trapezoidal metal sheet: vapor barrier PE foil 0.2 mm thick, insulating composite (KWI), and heat-sealed PVC membrane.

6. The roof cover according to claim 3 or 4, **characterized in that** the following layers are placed on the load bearing layer made of load bearing trapezoidal metal sheet: vapor barrier PE foil 0.2 mm thick, glass fiber mat, insulating composite (KWI), and heat-sealed PVC membrane.

7. The roof cover according to claim 3 or 4, **characterized in that** the following layers are placed on the load bearing layer made of load bearing trapezoidal metal sheet: vapor barrier PE foil 0.2 mm thick, insulating composite (KWI), glass fiber mat, and heat-sealed PVC membrane.

8. The roof cover according to claim 3 or 4, **characterized in that** the following layers are placed on the load bearing layer made of load bearing trapezoidal metal sheet: vapor barrier PE foil 0.2 mm thick, insulating composite (KWI), again vapor barrier PE foil 0.2 mm thick, and heat-sealed PVC membrane.

9. The roof cover according to claim 3 or 4, **characterized in that** the following layers are placed on the load bearing layer made of load bearing trapezoidal metal sheet: vapor barrier PE foil 0.2 mm thick, glass fiber mat, insulating composite (KWI), again vapor barrier PE foil 0.2 mm thick, insulating composite (KWI), and heat-sealed PVC membrane.

10. The roof cover according to claim 3 or 4, **characterized in that** the following layers are placed on the load bearing layer made of load bearing trapezoidal metal sheet: vapor barrier PE foil 0.2 mm thick, insulating composite (KWI), again vapor barrier PE foil 0.2 mm thick, insulating composite (KWI), glass fiber mat, and heat-sealed PVC membrane.
